# EUROPÄISCHE PATENTSCHRIFT

(11) **EP 1 297 025 B1**
(45) Veröffentlichungstag und Bekanntmachung des Hinweises auf die Patenterteilung: **25.10.2006**
(21) Anmeldenummer: 01962745.4
(22) Anmeldetag: 15.06.2001
(51) Int. Cl.: C08F 8/10, C08F 8/06

(54) **OXIDIERTE POLYOLEFINWACHSE**
OXIDISED POLYOLEFIN WAXES
CIRES DE POLYOLEFINE OXYDEES

(30) Priorität: 20.06.2000 DE 10029330
(43) Veröffentlichungstag der Anmeldung: 02.04.2003
(73) Patentinhaber: BASF Aktiengesellschaft, 67056 Ludwigshafen (DE)
(72) Erfinder: MIHAN, Shahram, 67061 Ludwigshafen (DE); DECKERS, Andreas, 55234 Flomborn (DE)
(86) Internationale Anmeldenummer: PCT/EP2001/006823
(87) Internationale Veröffentlichungsnummer: WO 2001/098377

(56) Entgegenhaltungen:
- EP-A- 0 810 232
- EP-A- 0 853 089
- EP-A- 0 890 583
- WO-A-00/34211
- WO-A-98/04570
- DE-A- 19 617 230

## Beschreibung

Die vorliegende Erfindung betrifft oxidierte Polyolefinwachse mit einem Molekulargewicht M_{w} im Bereich von 1000 bis 40000 g/mol, die durch Oxidation von Polyolefinen, die mittels Katalyse mit einem Single-Site-Katalysator auf Basis eines Komplexes eines Übergangsmetalls der Gruppen 5 bis 8 des Periodensystems der Elemente mit einem Tri-pnicogencyclohexanliganden pro Metallatom erhalten wurden.

Außerdem betrifft die vorliegende Erfindung ein Verfahren zur Herstellung von oxidierten Polyolefinwachsen durch Oxidation von Polyolefinen mit einem Molekulargewicht M_{w} im Bereich von 1000 bis 40000 g/mol mit sauerstoffhaltigen Agenzien bei einer Temperatur im Bereich von 140 bis 350°C, sowie die Verwendung von oxidierten Wachsen als oder in Überzugsmassen, als oder in Bodenpflegemitteln oder Lederpflegemitteln, sowie die Verwendung von oxidierten Polyolefinwachsen als oder in Überzugsmassen für Zitrusfrüchte.

Oxidierte Polyolefinwachse sind als solche bekannt. Sie werden im allgemeinen durch Oxidation von in der Regel niedermolekularem Ziegler-Polyethylen, Phillips-Polyethylen (PE-HD) oder auch Hochdruckpolyethylen (PE-LD) mit Luft oder reinem Sauerstoff erhalten, s. beispielsweise Kunststoff-Handbuch, Bd.4, S.161 ff. Carl-Hanser-Verlag, 1969.

Derartige oxidierte Wachse finden Verwendung als Überzugsmasse für verschiedene Anwendungsgebiete, beispielsweise bei der Oberflächenbehandlung von Fußböden oder Zitrusfrüchten.

Bei der Oxidation von Polyolefinwachsen bilden sich unter anderem Carboxyl-Gruppen in oder an den Polymerketten des Ausgangspolyolefins, deren Anzahl über die sogenannte Säurezahl bestimmt werden kann. Eine hohe Säurezahl der Wachse ist generell von Vorteil, da die Wachse besser dispergierbar und anwendbar sind.

Bei der Oxidation von bekannten Phillips-Polyethylen-, ziegler-Polyethylen- oder insbesondere Hochdruckpolyethylen-Wachsen beobachtet man eine starke Reduktion der Schmelzpunkte der oxidierten Wachse im Vergleich zum Ausgangspolymeren, die einhergeht mit einer unerwünschten Verminderung der Härte der oxidierten Wachse. Gerade aber für den Einsatz als oder in Überzugsmassen, beispielsweise in Bodenpflegemitteln oder bei der zitrusfrüchtekonservierung, ist eine hohe Härte und somit ein hoher Schmelzpunkt der oxidierten Wachse von Vorteil.

Aus DE-A 196 17 230 sind oxidierte Polyethylenwachse bekannt, die durch Oxidation von mittels Metallocenkatalyse hergestellten Wachsen gewonnen werden.

Weiterhin ist aus EP-A 0 890 583 ein Verfahren zur Oxidation von Polyethylenwachsen bekannt, bei dem der Polyethylenschmelze anorganische oder organische Säuren zugesetzt werden.

Die nach DE-A 196 17 230 und EP-A 0 890 583 erhältlichen Wachse weisen jedoch gegenüber den Ausgangsmaterialien deutlich erniedrigte Schmelzviskositäten auf. Dies ist auf einen Abbau der Polymerketten zurückzuführen. Ein starker Abbau der Polymerketten ist jedoch unvorteilhaft, weil dadurch die anwendungstechnischen Eigenschaften verschlechtert werden. Insbesondere die Härte in Anwendungen der aus dem Stand der Technik bekannten oxidierten Wachse in oder als Bodenpflegemittel oder Überzugsmassen, beispielsweise für Zitrusfrüchte, ist noch verbesserungsfähig.

Außerdem liegen die Reaktionszeiten für die Oxidation im Bereich mehrerer Stunden und sind somit unvorteilhaft lang, was zu einer geringeren Kapazität der Anlage führt.

Aufgabe der vorliegenden Erfindung war es daher, den genannten Nachteilen abzuhelfen und insbesondere oxidierte Polyolefinwachse mit relativ hohem Molekulargewicht und gleichzeitig großer Säurezahl, großer Verseifungszahl und vergleichsweise hoher Härte und mit hohem Schmelzpunkt zur Verfügung zu stellen.

Weiterhin war es eine Aufgabe der vorliegenden Erfindung, ein Oxidationsverfahren von Polyolefinen zur Verfügung zu stellen, welches oxidierte Polyolefinwachse mit den soeben genannten erwünschten Eigenschaften zugänglich macht.

Demgemäß wurden oxidierte Wachse gefunden, die mittels Oxidation von Polyolefinwachsen hergestellt wurden, die durch Katalyse@@@@ ausgewählter Komplexe von Übergangsmetallen der Gruppe 5 bis 8 des Periodensystems der Elemente erhalten wurden. Die erfindungsgemäßen oxidierten Wachse haben ein Molekulargewicht M_{w} im Bereich von 1000 bis 40000 g/mol. Weiterhin wurde ein Verfahren zur Herstellung der erfindungsgemäßen oxidierten Polyolefinwachse durch Oxidation von Polyolefinen eines Molekulargewichts M_{w} im Bereich von 1000 bis 40000 g/mol mit sauerstoffhaltigen Agenzien bei einer Temperatur im Bereich von 140 bis 350°C gefunden.

Weiterhin wurde die Verwendung von oxidierten Wachsen als oder in Überzugsmassen, die Verwendung von oxidierten Wachsen als oder in Bodenpflegemittel und die Verwendung von oxidierten Wachsen als oder in Überzugsmassen für Zitrusfrüchte gefunden.

Die den oxidierten Wachsen zugrunde liegenden Polyolefine haben ein gewichtsmittleres Molekulargewicht M_{w}, bestimmt mit der Methode der Gelpermeationschromatographie (GPC) in 1,2,4-Trichlorbenzol bei 135°C mit Polyethylen- oder Polypropylenstandard, im Bereich von 1000 bis 40000 g/mol, vorzugsweise im Bereich von 2000 bis 20000 g/mol. Die Polydispersität M_{w}/Mₙ der den oxidierten Wachsen zugrunde liegenden Polyolefine, gemessen mit der Methode der GPC wie beschrieben, liegt im Allgemeinen im Bereich von 1,5 bis 3,0, vorzugsweise im Bereich von 1,8 bis 2,5.

Die den oxidierten Wachsen zugrunde liegenden Polyolefine können durch die Polymerisation der entsprechenden Monomeren in Gegenwart von Komplexen der allgemeinen Formeln I c erhalten werden.

Wachse, die sich mit Hilfe von solchen Single-Site-Katalysatoren eines Übergangsmetalls der Gruppen 5 bis 8 des Periodensystems herstellen lassen, die einen Tri-pnicogencyclohexanliganden pro Übergangsmetallatom enthalten, sind als solche bekannt. Es handelt sich bei den dafür notwendigen Metallkomplexen um Verbindungen der allgemeinen Formel I c.

In Formel I c 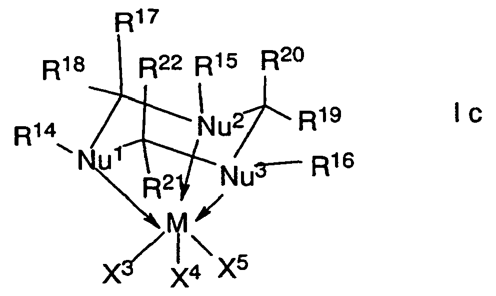 sind die Variablen wie folgt definiert:
- M: ist ein Element aus der Reihe V, Nb, Ta, Cr, Mo, W, Mn, Fe in der Oxidationsstufe +3; bevorzugt V, Cr oder Mo und besonders bevorzugt Cr;

- X³, X⁴ und X⁵ sind unabhängig voneinander
- Halogen wie Fluor, Chlor, Brom oder Jod, wobei Chlor und Brom besonders bevorzugt sind;
- Trifluoracetat,
- BF₄-, PF₆- oder SbF₆-,
- C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl und n-Butyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₁-C₁₂-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy oder
- NR⁸R⁹, wobei R⁸ und R⁹ unabhängig voneinander aus Wasserstoff, C₁-C₁₂-Alkyl, C₂-C₁₂-Alkenyl und C₆-C₁₄-Aryl ausgewählt sind, die einen gesättigten oder ungesättigten 5- bis 10-gliedrigen Ring bilden können; bevorzugt sind die Dimethylamino-, die Diethylamino-, die Düsopropylamino-, die Methylphenylaminogruppe und die Diphenylaminogruppe. Beispiele für Aminogruppen mit gesättigten Ringen sind die *N*-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe;

Bevorzugt sind X³ bis X⁵ gleich, ganz besonders bevorzugt sind X³ bis X⁵ Chlor.
- Nu¹ bis Nu³ sind unabhängig voneinander ausgewählt aus N oder P, bevorzugt sind Nu¹ und Nu² jeweils N und besonders bevorzugt sind Nu¹ bis Nu³ jeweils N.
- R¹⁴ bis R¹⁶ sind unabhängig voneinander
- Wasserstoff,
- Halogen wie Fluor, Chlor, Brom oder Jod, wobei Chlor und Brom bevorzugt sind;
- C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
- ein- oder mehrfach mit Donoratomen substituiertes C₁-C₁₂-Alkyl, z.B. nicht-cyclische oder cyclische Ether, Alkohole, Ketale, Thioether oder Amine; beispielsweise Methoxymethyl, Ethoxymethyl, Ethoxyethyl, β-Hydroxyethyl, ω-Ethoxypropyl, (2-Ethylhexyloxy)-propyliden, Methoxyethoxypropyliden oder ω-Dimethylaminopropyl;
- ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
- Silyl SiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
- Siloxy OSiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
- C₁-C₁₂-Alkoxy" bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
- C₆-C₁₄-Aryl, das seinerseits substituiert ist mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹², Siloxy OSiR¹⁰R¹¹R¹² oder C₁-C₁₂-Alkoxy, wobei diese Gruppen wie oben spezifiziert sind;

Bevorzugt sind R¹⁴ bis R¹⁶ gleich.

R¹⁷ bis R²² sind unabhängig voneinander
- Wasserstoff,
- C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
- ein- oder mehrfach halogeniertes C₁-C₁₂-Alkyl wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- ein- oder mehrfach mit Donoratomen substituiertes C₁-C₁₂-Alkyl, z.B. nicht-cyclische oder cyclische Ether, Alkohole, Ketale, Thioether oder Amine; beispielsweise Methoxymethyl, Ethoxymethyl, Ethoxyethyl, β-Hydroxyethyl, ω-Ethoxypropyl, (2-Ethylhexyloxy)-propyliden, Methoxyethoxypropyliden oder ω-Dimethylaminopropyl;
- C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
- Silyl SiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
- Siloxy OSiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyloxy-, Triethylsilyloxy-, Trüsopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
- C₁-C₁₂-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
- C₆-C₁₄-Aryl, die ihrerseits substituiert sind mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹², Siloxy OSiR¹⁰R¹¹R¹² oder C₁-C₁₂-Alkoxy, wobei diese Gruppen wie oben spezifiziert sind;

Bevorzugt sind R¹⁷, R¹⁹ und R²¹ jeweils gleich, und bevorzugt sind R¹⁸, R²⁰ und R²² jeweils Wasserstoff. Ganz besonders bevorzugt sind R¹⁷ bis R²² Wasserstoff. Die zur Synthese dieser ganz besonders bevorzugten Verbindungen notwendigen Triazacyclohexan-Liganden lassen sich besonders gut synthetisieren.

In einer besonderen Ausführungsform der allgemeinen Formel I c können zwei benachbarte Reste gemeinsam einen gesättigten oder ungesättigten 4- bis 9-gliedrigen Ring bilden können, beispielsweise können zwei Reste zusammen sein: C₃-C₉-Alkyliden wie beispielsweise -(CH₂)₃- (Trimethylen), -(CH₂)₄- (Tetramethylen), -(CH₂)₅- (Pentamethylen), -(CH₂)₆- (Hexamethylen), -CH₂-CH=CH-, -CH₂-CH=C_{H}-_{CH2}-, -CH=CH-CH=CH-, -O-CH₂-O-, -O-CH(CH₃)-O-, -O-CH-(C₆H₅)-O-, -O-CH₂-CH₂-O-, -O-C(CH₃)₂-O-, -N(CH₃)-CH₂-CH₂-N(CH₃)-, -N(CH₃)-CH₂-N(CH₃)- oder -O-Si(CH₃)₂-O-

Die Herstellung der Übergangsmetallkomplexe der allgemeinen Formel I c ist an sich bekannt.

Die Herstellung von Triazacycloalkan-Liganden ist an sich bekannt. Die zur Synthese der ganz besonders bevorzugten Verbindungen der allgemeinen Formel I c, bei denen R¹⁷ bis R²² jeweils Wasserstoff und die Reste R¹⁴ bis R¹⁶ jeweils gleich sind, lassen sich ganz besonders gut durch Vermischen von Formaldehyd beispielsweise in der Form von Formalin-Lösung und dem zugehörigen Amin R¹⁴-NH₂ synthetisieren. Verschiedene Synthesewege für diese Komplexliganden werden z.B. beschrieben in F. Weitl, *et al. J. Am. Chem. Soc.* **1979,** *101* 2728; M. Takahashi, S. Takamoto, *Bull. Chem. Soc. Japan* **1977,** *50,* 3413; T. Arishima *et al., Nippon Kagaku Kaishi* **1973,** 1119; L. Christiansen *et al. Inorg. Chem.* **1986,** *25*, 2813; L.R. Gahan *et al., Aust. J. Chem.* **1982,** *35,* 1119; B.A. Sayer *et al., Inorg. Chim. Acta,* **1983,** *77*, L63; K Wieghardt *et al., Z. Naturforsch.,* **1983,** *38b,* 81 und I.A. Fallis et al., *J. Chem. Soc., Chem. Commun.* **1998,** 665.

Die Metallkomplexe, insbesondere die Chromkomplexe, lassen sich auf einfache Weise erhalten, wenn man die entsprechenden Metallsalze wie z.B. Metallchloride oder Metallcarbonyle mit dem Liganden umsetzt, z. B. in P. Chaudhuri, K. Wieghardt, *Prog. Inorg. Chem.* **1987,** *35,* 329 oder G. P. Stahley *et al., Acta Crystall.* **1995**, *C51,* 18.

Damit vorstehende Komplexe der allgemeinen Formeln I c katalytisch aktiv sind, werden sie mit einer Kationen-bildenden Verbindung aktiviert. Geeignete Kationen-bildenden Verbindungen sind ausgewählte Aluminium- oder Bor-Verbindungen mit elektronenziehenden Resten (z.B. Trispentafluorphenylboran, Trispentafluorphenylaluminium, *N,N*-Dimethylanilinium-tetrakis-pentafluorphenylborat, Tri-n-butylammonium-tetrakis-pentafluorphenylborat, *N,N-*Dimethylanilinium-tetrakis-(3,5-bisperfluormethyl)-phenylborat, Tri-n-butylammonium-tetrakis-(3,5-bisperfluormethyl)-phenylborat sowie Tritylium-tetrakispentafluorphenylborat). Diese Aktivatoren für Komplexe der allgemeinen Formeln I c sind in DE-A 199 35 407, in PCT/EP 0002716 bzw. in Angew. Chem., Int. Ed., 1994, Bd. 33, S. 1877 beschrieben. Bevorzugt sind Dimethylanilinium-tetrakispentafluorphenylborat, Tritylium-tetrakispentafluorphenylborat sowie Trispentafluorphenylboran.

Verwendet man Bor- oder Aluminiumverbindungen als Aktivatoren für die Komplexe der allgemeinen Formel I c, so setzt man sie im Allgemeinen in einem molaren Verhältnis von 1 : 10 bis 10 : 1, bezogen auf M, ein; bevorzugt 1 : 2 bis 5 : 1 und besonders bevorzugt 1 : 1,5 bis 1,5 : 1.

Eine andere geeignete Klasse Kationen-bildender Verbindungen sind die Aluminoxane der allgemeinen Formel II a bis b.

Die Struktur der Aluminoxane ist nicht genau bekannt. Es handelt sich bei ihnen um Produkte, die durch vorsichtige partielle Hydrolyse von Aluminiumalkylen erhalten werden (s. DE-A 30 07 725). Diese Produkte liegen nicht rein vor, sondern als Gemische von offenkettigen und cyclischen Strukturen des Typs II a und b. Diese Gemische liegen vermutlich in einem dynamischen Gleichgewicht zueinander vor.

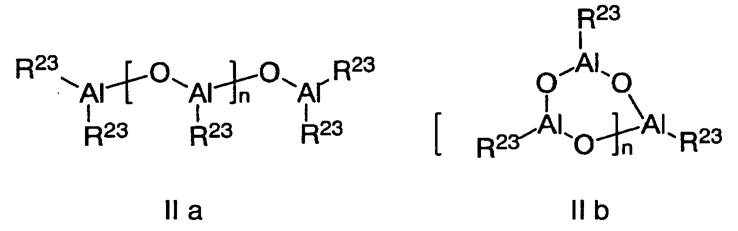

In Formel II a und b sind die Reste R²³ unabhängig voneinander
- C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt ist Methyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl, oder
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl; und

- n: ist eine ganze Zahl von 0 bis 40, bevorzugt von 1 bis 25 und besonders bevorzugt von 2 bis 22.

In der Literatur werden auch käfigartige Strukturen für Aluminoxane diskutiert (Y. Koide, S.G. Bott, A.R. Barron *Organometallics* **1996,** *15*, 2213-26; A.R. Barron *Macromol. Symp.* **1995,** *97*, 15-25). Unabhängig davon, wie die Struktur der Aluminoxane tatsächlich aussieht, sind sie als Aktivatoren für Komplexe von Übergangsmetallen der allgemeinen Formeln I c geeignet.

Gemische verschiedener Aluminoxane sind in den Fällen besonders bevorzugte Aktivatoren, in denen in einer Lösung eines Paraffins, beispielsweise n-Heptan oder Isododekan, polymerisiert wird. Eine besonders bevorzugtes Gemisch ist das kommerziell bei der Firma Witco GmbH erhältliche CoMAO mit einer Formel von [(CH₃)_{0,9}(iso-C₄H₉)_{0,1}AlO]ₙ.

Um die Komplexe der allgemeinen Formel I c mit Aluminoxanen zu aktivieren, ist im Allgemeinen ein Überschuss von Aluminoxan, bezogen auf M, notwendig. Sinnvolle Molverhältnisse M : Al liegen im Bereich von 1 : 10 bis 1 : 10 bis 1 : 10.000, bevorzugt 1 : 50 bis 1 : 1000 und besonders bevorzugt 1 : 100 bis 1 : 500.

Der gewählte Komplex der allgemeinen Formeln I c und die Kationen-bildende Verbindung bilden zusammen ein Katalysatorsystem. Durch Zugabe einer oder mehrerer weiteren Aluminiumalkylverbindung der allgemeinen Formel Al(R²³)₃ kann die Aktivität dieses Katalysatorsystems weiter gesteigert werden.

Durch Zugabe von weiterem Aluminiumalkyl der allgemeinen Formel Al(R²³)₃ oder Aluminoxanen kann die Aktivität des Katalysatorsystems erhöht werden; Aluminiumalkyle der allgemeinen Formel Al(R²³)₃ oder Aluminoxane können auch als Molmassenregler wirken. Ein weiterer effektiver Molmassenregler ist Wasserstoff. Besonders gut kann man die Molmasse durch die Reaktionstemperatur und die Verweilzeit regeln.

Moderne großtechnische Herstellungsverfahren für Polyolefinwachse sind Lösungsverfahren, Suspensionsverfahren, Massepolymerisationsverfahren in flüssigem oder überkritischem Monomer sowie Gasphasenverfahren, wobei es sich bei letzteren um gerührte Gasphasen oder um Gasphasenwirbelschichtverfahren handeln kann.

Damit die Komplexe der allgemeinen Formeln I c in Suspensionsverfahren, Massepolymerisationsverfahren oder Gasphasenverfahren eingesetzt werden können, ist es vorteilhaft, sie auf einem festen Träger zu immobilisieren. Andernfalls kann es zu Morphologieproblemen des Polymers (Brocken, Wandbeläge, Verstopfungen in Leitungen oder Wärmetauschern) kommen, die zum Abschalten der Anlage zwingen. Geträgerte Komplexe der allgemeinen Formel I c sind aus DE-A 199 35 407 bekannt.

Gut geeignete Monomere sind Ethylen und C₃- bis C₁₀-Alk-1-ene, also Propylen, 1-Buten, 1-Penten, 1-Hexen, 1-Hepten, 1-Octen, 1-Nonen, 1-Decen. Vorzugsweise verwendet man Ethylen und/oder Propylen als Monomeren.

Die Monomeren können homopolymerisiert oder in jedem Verhältnis miteinander copolymerisiert werden. Bevorzugte Polyolefine, die den oxidierten Wachsen zugrunde liegen, sind Ethylenhomopolymerisate mit einer Dichte im Bereich von 0,90 bis 0,98 g/cm³, vorzugsweise im Bereich von 0,94 bis 0,97 g/cm³ und einem M_{w}, bestimmt mit der Methode der GPC wie oben beschrieben, im Bereich von 1000 bis 40000 g/mol, vorzugsweise im Bereich von 2000 bis 20000 g/mol.

Weiterhin eignen sich als Ausgangspolyolefine Ethylen/C₃- bis C₁₀-Alk-1-en-copolymerisate mit einem Gesamtgehalt an auf das Alk-1-en oder die Alk-1-ene zurückgehenden Struktureinheiten im Copolymeren im Bereich von 0,1 bis 15 mol-%, vorzugsweise im Bereich von 1 bis 10 mol-%, bezogen auf das Copolymere. Bevorzugte Ethylen/Alk-1-en-copolymerisate sind Ethylen-Propylen-Copolymerisate mit einem Gehalt an, auf das Propylen zurückgehenden Struktureinheiten im Copolymerisate im Bereich von 0,1 bis 10 mol-%, vorzugsweise im Bereich von 1 bis 5 mol-%, bezogen auf das Copolymerisat. Die Copolymerisate haben im allgemeinen ein M_{w}, bestimmt mit der Methode der GPC wie oben beschrieben, im Bereich von 1000 bis 40000 g/mol, vorzugsweise im Bereich von 2000 bis 20000 g/mol.

Weitere bevorzugte Polyolefine, die den oxidierten Wachsen zugrunde liegen, sind isotaktische Propylen-Homopolymerisate mit einem Pentadengehalt mmmm an isotaktischen Pentaden, bestimmt mit der Methode der ¹³C-NMR-Spektroskopie, im Bereich von 90 bis 98 % und einem Mw, bestimmt mit der Methode der GPC wie oben beschrieben, im Bereich von 1000 bis 40000 g/mol, vorzugsweise im Bereich von 2000 bis 20000 g/mol.

Außerdem eigenen sich auch Copolymerisate des Propylens mit Ethylen und /oder C₄- bis C₁₀-Alk-1-enen als Basispolyolefine. Diese Propylencopolymerisate haben üblicherweise einem Gesamtgehalt an, auf das Ethylen und/oder die C₄- bis C₁₀-Alk-1-ene zurückgehenden, Struktureinheiten im Copolymeren im Bereich von 0,1 bis 15 mol-%, vorzugsweise im Bereich von 1 bis 10 mol-%, bezogen auf das Copolymere. Bevorzugte Propylencopolymeren sind Propylen-Ethylen-Copolymerisate mit einem Gehalt an, auf das Ethylen zurückgehenden Struktureinheiten im Copolymerisat im Bereich von 0,1 bis 10 mol-%, vorzugsweise im Bereich von 1 bis 5 mol-%, bezogen auf das Copolymerisat. Die Propylencopolymerisate haben im allgemeinen ein M_{w}, bestimmt mit der Methode der GPC wie oben beschrieben, im Bereich von 1000 bis 40000 g/mol, vorzugsweise im Bereich von 1000 bis 20000 g/mol.

Die Monomeren werden in Gegenwart von Komplexen der allgemeinen Formeln I c homo- oder copolymerisiert.

Geeignete Reaktoren zur Herstellung der Polymerisate oder Copolymerisate sind unter anderem kontinuierlich betriebene Rührkessel, wobei man gegebenenfalls auch eine Reihe von mehreren hintereinandergeschalteten Rührkesseln verwenden kann. Die Polymerisationsreaktionen lassen sich in der Gasphase, in Suspension, in flüssigen und in überkritischen Monomeren oder in inerten Lösungsmitteln durchführen.

Die Oxidation der den oxidierten Wachsen zugrunde liegenden Polyolefine kann mit reinem Sauerstoff oder sauerstoffhaltigen Gasen durchgeführt werden. Vorzugsweise verwendet man Luft zur Oxidation der Polyolefine. Zur Unterstützung der Oxidation kann man organische Peroxide, wie z.B. Di-tert.-butylperoxid zugeben; auch die Zugabe von Schwermetallsalzen wie Manganacetat ist denkbar. Weiterhin ist es möglich, anorganische oder organische Säuren zur Beschleunigung der Oxidationsreaktion zuzugeben. Geeignete anorganische Säuren sind Salzsäure oder Salpetersäure. Als organische Säuren sind Mono-, Di- oder Tricarbonsäuren zu nennen. Geeignete Monocarbonsäuren haben 1 bis 3 C-Atome, wobei Ameisensäure und Essigsäure bevorzugt sind. Höhere Monocarbonsäuren sind aufgrund ihres unangenehmen Geruchs weniger bevorzugt. Geeignete Dicarbonsäuren haben 2 bis 6 C-Atome. Als bevorzugte Dicarbonsäuren seien Oxalsäure, Malonsäure, Maleinsäure, Weinsäure, Äpfelsäure und Adipinsäure beispielhaft genannt. Besonders bevorzugte Dicarbonsäuren sind Weinsäure, Äpfelsäure und Adipinsäure; eine besonders bevorzugte Tricarbonsäure ist Zitronensäure. Da Essigsäure und Adipinsäure häufig im Verlauf der Oxidation gebildet werden, ist eine Zugabe von weiterer Säure aber nicht unbedingt notwendig.

Geeignete Oxidationsverfahren für Polyolefinwachse sind beispielsweise aus DE-A 20 35 706 prinzipiell bekannt.

In einem bevorzugten Verfahren setzt man das erfindungsgemäße Polyolefin, vorzugsweise ein Ethylenhomopolymerisat, in einem Rohrreaktor oder einem gerührten Autoklaven bei einer Temperatur im Bereich von 140 bis 350°C, vorzugsweise 150 bis 250°C und einem Druck im Bereich von 100 bis 20000 kPa, vorzugsweise im Bereich von 500 bis 4000 kPa mit sauerstoffhaltigen Gasen, vorzugsweise Luft um. Die zugeführte Sauerstoffmenge liegt dann in der Regel im Bereich von 0,1 bis 1000 1 Sauerstoff/h·kg Wachs, vorzugsweise im Bereich von 1 bis 50 1 Sauerstoff/h·kg Wachs.

Die erhältlichen oxidierten Polyolefinwachse, insbesondere die oxidierten Wachse aus Ethylenhomopolymerisat, haben ein Verhältnis von Säurezahl zu Verseifungszahl im Bereich von 1:1 bis 1:4, vorzugsweise im Bereich von 1:1 bis 1:2.

Die Säurezahl wird mittels Titration nach DIN 53402 bestimmt. Die Verseifungszahl wird mittels Titration nach DIN 53401 bestimmt. Geeignete Säurezahlen sind 1 bis 150 mg KOH/g, bevorzugt 10 bis 50 mg KOH/g und besonders bevorzugt 15 bis 30 mg KOH/g. Der Schmelzpunkt der erfindungsgemäßen oxidierten Wachse, bestimmt mit der Methode der Differential Scanning Calorimetry (DSC), nach DIN 51007 liegt üblicherweise in einem Bereich von 90 bis 125°C, vorzugsweise in einem Bereich von 110 bis 125°C.

Die Härte der erfindungsgemäßen oxidierten Wachse wird bestimmt mit der Methode der Kugeldruckhärte, nach DIN 50133 liegt üblicherweise in einem Bereich von 800 bis 2000 N/mm², vorzugsweise in einem Bereich von 1000 bis 1500 N/mm².

Üblicherweise liegt die Viskosität der erfindungsgemäßen oxidierten Wachse, gemessen mit der Methode Ubbelohde-Schmelzviskosität bei 140°C nach DIN 51562 im Bereich von 100 bis 10000 cSt, vorzugsweise im Bereich von 200 bis 5000 cSt.

Die erfindungsgemäßen Wachse eignen sich gut als Überzugsmasse oder als Komponente in Überzugsmassen. Die Überzugsmasse zeichnet sich in der Regel durch ihre hohe Härte und ihren hohen Glanz aus.

Beispielsweise sind die erfindungsgemäßen oxidierten Wachse besonders gut geeignet als Komponente in Bodenpflegemitteln oder Lederpflegemitteln, insbesondere von Schuhpflegemitteln.

### Arbeitsbeispiele

### Herstellung von Probe 1

In einem 10-Liter-Stahlautoklav (Fa. Büchi) wurde 50 mg (67 µmol) (*n-*C₁₂H₂₅NCH₂)₃CrCl₃, (hergestellt analog zu Angew. Chem., Int. Ed., 1994, Bd. 33, S. 1877) gelöst in Toluol, mit 14 ml 30% MAO der Fa. Witco aktiviert, wobei ein Al:Cr-Verhältnis von 1000:1 eingestellt wurde. Es wurden 4 l Isobutan und 80 l (3,8 mol) Wasserstoff aufgepresst, danach wurde der Autoklav auf 90°C erwärmt. Anschließend wurden 40 bar Ethylen aufgepresst und 30 Minuten polymerisiert, wobei der Druck durch Nachdosieren von Ethylen bei 40 bar gehalten wurde.

Die Polymerisation wurde durch Entspannen des Autoklaven abgebrochen.

Der Versuch wurde dreimal wiederholt.

Ausbeute: 460 g, das entspricht einer Aktivität von 14000 kg PE(mol Cr-h).

Das so erhaltene Wachs hatte die folgenden Eigenschaften: Festpunkt 128,5°C; M_{w}: 5200 g, Mₙ: 2100 g. M_{w}/Mₙ = 2,5.

Als Vergleichsbeispiel V1 wurde Clariant-Wachs PE 130, hergestellt durch Ziegler-Natta-Katalyse, eingesetzt. Als Vergleichsbeispiel V2 wurde ein Polyethylenwachs, hergestellt durch Metallocen-Katalyse nach DE-A 196 17 230, verwendet.

**Tabelle 1**

| Probe | Fp [°C] | Härte [bar] | Schmelzviskosität [140°C] [cSt] | Vinyl- und Vinyliden-Doppelbindungen/1000 C-Atome, bestimmt durch IR-Spektroskopie |
|---|---|---|---|---|
| 1 | 128,5 | 1250 | 410 | 2,3 |
| V1 | 128,7 | 1270 | 380 | 0,2 |
| V2 | 128,3 | 1170 | 350 | 0,3 |

| | | | | |
|---|---|---|---|---|
| Fp: gemessen nach DIN 51007; Härte: gemessen nach DIN 50133 | | | | |

### Beispiele 1, V1, V2

Die Oxidationen der Wachse 1, V1 und V2 (siehe Tabelle oben) wurden in einem gerührten (Impellerrührer) 1-l-Stahlautoklaven mit Druckhaltung durchgeführt. Man legte das zu oxidierende Wachs vor (800 g) und erwärmte auf 160°C. Nachdem das Wachs geschmolzen war, wurde der Rührer eingeschaltet und Luft (30 l/h-kg) durchgeleitet. Die Reaktion wurde beim Erreichen der gewünschten Säurezahl abgebrochen, das oxidierte Wachs abgelassen und analysiert.

**Tabelle 2**

| Probe | Fp [°C] | Härte [bar] | Schmelzviskosität (140°C) [cSt] | Säurezahl [mg KOH/g] |
|---|---|---|---|---|
| 1 | 122,3 | 810 | 215 | 20,5 |
| V1 | 117,2 | 660 | 150 | 20,5 |
| V2 | 121,5 | 730 | 125 | 20,4 |

Die Säurezahl wurde nach DIN 53402 bestimmt.

### Anwendungsbeispiele

Je 20 Teile Oxidatwachs aus den Beispielen 1 beziehungsweise den Vergleichsbeispielen V1 und V2 wurden mit 2 Gewichtsäquivalenten Morpholin und 5 Gewichtsäquivalenten Olein in 68 Gewichtsäquivalenten Wasser versetzt und im Druckautoklaven 15 min. bei 150°C erhitzt. Die so erhaltene Emulsion wurde auf Raumtemperatur abgekühlt, filtriert und anschließend eine Probe zur Glanzmessung entnommen. 3 ml der Dispersion wurden in 60 mm Kastenrakel gefüllt und auf Leder aufgetragen; nach dem Tragen wurden dann die Glanzwerte [85°] gemessen (Gerät der Fa. Dr. Lange, UME-2-Gerät)

| | |
|---|---|
| ohne Beschichtung: | 5,8 |
| mit Dispersion aus Beispiel 1 | 9,7 |
| mit Dispersion aus Vergleichsbeispiel V1 | 6,4 |
| mit Dispersion aus Vergleichsbeispiel V2 | 8,6 |

## Patentansprüche

1. Oxidierte Polyolefinwachse mit einem Molekulargewicht M_{w} im Bereich von 1000 bis 40000 g/mol, erhältlich durch Oxidation von Polyolefinen, die mittels Katalyse mit einem Single-Site-Katalysator auf Basis eines Komplexes eines Übergangsmetalls der Gruppen 5 bis 8 des Periodensystems der Elemente mit einem Tri-pnicogencyclohexanliganden pro Metallatom hergestellt wurden.

2. Oxidierte Wachse gemäß Anspruch 1, **dadurch gekennzeichnet, dass** der Single-Site-Katalysator als katalytisch aktive Komponente einen 1,3,5-Triazacyclohexankomplex, einen 1,3-Diaza-5-phosphacyclohexankomplex oder einen 1,3,5-Triphosphacyclohexankomplex eines Übergangsmetalls der Gruppen 5 bis 8 des Periodensystems enthält.

3. Oxidierte Wachse nach Anspruch 1 bis 2, **dadurch gekennzeichnet, dass** der Single-Site-Katalysator einen Cr-Komplex als katalytisch aktive Komponente enthält.

4. Oxidierte Wachse nach Anspruch 1 bis 3, wobei als Polyolefine Ethylenhomo- oder copolymerisate verwendet werden.

5. Oxidierte Wachse nach Anspruch 1, wobei das Verhältnis aus Säurezahl zu Verseifungszahl der oxidierten Wachse im Bereich von 1 : 1 bis 1 : 4 liegt.

6. Verfahren zur Herstellung von oxidierten Polyolefinwachsen durch Oxidation von Polyolefinen mit einem Molekulargewicht M_{w} im Bereich von 1000 bis 40000 g/mol mit sauerstoffhaltigen Agenzien bei einer Temperatur im Bereich von 140 bis 350°C, **dadurch gekennzeichnet, dass** man als Polyolefine solche einsetzt, die mittels Katalyse mit einem Single-Site-Katalysator auf Basis eines Komplexes eines Übergangsmetalls der Gruppen 5 bis 8 des Periodensystems der Elemente mit einem Tri-pnicogen-cyclohexanliganden pro Metallatom erhalten wurden.

7. Verfahren nach Anspruch 6, **dadurch gekennzeichnet, daß** man als sauerstoffhaltiges Agens Luft verwendet.

8. Verfahren nach den Ansprüchen 6 und 7, **dadurch gekennzeichnet, dass** man die Oxidation unter Zugabe einer anorganischen oder organischen Säure durchführt.

9. Verfahren nach den Ansprüchen 6 bis 8, **dadurch gekennzeichnet, daß** man als Polyolefine Ethylenhomo- oder copolymerisate verwendet.

10. Verwendung von oxidierten Wachsen gemäß den Ansprüchen 1 bis 5 in oder als Überzugsmassen.

11. Verwendung von oxidierten Wachsen gemäß den Ansprüchen 1 bis 5 in oder als Bodenpflegemittel oder Lederpflegemittel.

12. Verwendung von oxidierten Wachsen gemäß den Ansprüchen 1 bis 5 in oder als Überzugsmassen für Zitrusfrüchte.

## Claims

1. An oxidized polyolefin wax having a molecular weight M_{w} in the range from 1000 to 40,000 g/mol, obtainable by oxidizing polyolefins prepared by catalysis using a single-site catalyst based on a complex of a transition metal from groups 5 to 8 of the Periodic Table of the Elements with one tri-pnicogen-cyclohexane ligand per metal atom.

2. The oxidized wax according to claim 1, wherein the single-site catalyst comprises as catalytically active component a 1,3,5-triazacyclohexane complex, a 1,3-diaza-5-phosphacyclohexane complex, or a 1,3,5-triphosphacyclohexane complex of a transition metal from groups 5 to 8 of the Periodic Table.

3. The oxidized wax according to either of claims 1 and 2, wherein the single site catalyst comprises as catalytically active component a Cr complex.

4. The oxidized wax according to any of claims 1 to 3, wherein said polyolefins comprise ethylene homopolymers or copolymers.

5. The oxidized wax according to claim 1, wherein the ratio of acid number to saponification number is in the range from 1:1 to 1:4.

6. A process for preparing an oxidized polyolefin wax by oxidizing polyolefins having a molecular weight M_{w} in the range from 1000 to 40,000 g/mol with oxygen agents at a temperature in the range from 140 to 350°C, which comprises using polyolefins obtainable by catalysis using a single site catalyst based on a complex of a transition metal from groups 5 to 8 of the Periodic Table of the Elements with one tri-pnicogen-cyclohexane ligand per metal atom.

7. The process according to claim 6, wherein said oxygen agent comprises air.

8. The process according to either of claims 6 and 7, wherein the oxidation is conducted with the addition of an organic or inorganic acid.

9. The process according to any of claims 6 to 8, wherein said polyolefins comprise ethylene homopolymers or copolymers.

10. The use of an oxidized wax according to any of claims 1 to 5 in or as a coating composition.

11. The use of an oxidized wax according to any of claims 1 to 5 in or as a floorcare or leathercare composition.

12. The use of an oxidized wax according to any of claims 1 to 5 in or as a coating composition for citrus fruits.

## Revendications

1. Cires de polyoléfines oxydées avec un poids moléculaire M_{w} dans le domaine de 1000 à 40 000 g/mol., préparables par oxydation de polyoléfines qui ont été préparées par catalyse avec un catalyseur single-site à base d'un complexe d'un métal de transition des groupes 5 à 8 du système périodique des éléments avec un ligand de tri-pnicogène-cyclohexane par atome de métal.

2. Cires oxydées selon la revendication 1, **caractérisées en ce que** le catalyseur single-site contient, en tant que composant catalytiquement actif un complexe de 1, 3, 5-triazacyclohexane, un complexe de 1, 3-diaza-5-phosphacyclohexane ou un complexe de 1, 3, 5-tri-phosphacyclohexane d'un métal de transition des groupes 5 à 8 du système périodique.

3. Cires oxydées selon la revendication 1 ou 2, **caractérisées en ce que** le catalyseur single-site contient un complexe de Cr comme composant catalytiquement actif.

4. Cires oxydées selon la revendication 1 à 3, des homopolymérisats ou des copolymérisats d'éthylène étant utilisés comme polyoléfines.

5. Cires oxydées selon la revendication 1, le rapport entre l'indice d'acide et l'indice de saponification des cires oxydées se situant dans un domaine de 1 :1 à 1 : 4.

6. Procédé pour la préparation de cires de polyoléfines oxydées par oxydation de polyoléfines avec un poids moléculaire M_{w} dans le domaine de 1000 à 40 000 g/mol avec des agents contenant de l'oxygène à une température se situant entre 140 et 350°C, **caractérisé en ce que** l'on utilise comme polyoléfines des polyoléfines qui ont été obtenues par catalyse avec un catalyseur single-site à base d'un complexe d'un métal de transition des groupes 5 à 8 du système périodique des éléments avec un ligand de tri-pnicogène-cyclohexane par atome de métal.

7. Procédé selon la revendication 6, **caractérisé en ce que** l'on utilise de l'air comme agent contenant de l'oxygène.

8. Procédé selon les revendications 6 et 7, **caractérisé en ce que** l'on exécute l'oxydation en ajoutant un acide inorganique ou organique.

9. Procédé selon les revendications 6 à 8, **caractérisé en ce que** l'on utilise des homopolymérisats ou copolymérisats d'éthylène comme polyoléfines.

10. Utilisation de cires oxydées selon les revendications 1 à 5 dans des masses de revêtement ou comme masses de revêtement.

11. Utilisation de cires oxydées selon les revendications 1 à 5 dans des produits d'entretien du sol ou des produits d'entretien du cuir ou comme lesdits produits.

12. Utilisation de cires oxydées selon les revendications 1 à 5 dans des masses de revêtement ou comme masses de revêtement pour agrumes.
